# EUROPEAN PATENT APPLICATION

(11) **EP 2 905 113 A1**
(43) Date of publication of application: **12.08.2015**
(21) Application number: 12886005.3
(22) Date of filing: 05.10.2012
(51) Int. Cl.: B28B 11/12, B01D 46/00, B01J 35/04, B28B 3/20, C04B 38/00, F01N 3/022

(54) **CUTTING METHOD FOR HONEYCOMB DRIED BODY AND PRODUCTION METHOD FOR HONEYCOMB STRUCTURE**

(71) Applicant: Ibiden Co., Ltd, Ogaki-shi, Gifu 503-8604 (JP)
(72) Inventor: MAKINO, Hayato, Ibi-gun Gifu 501-0695 (JP); ISHIKAWA, Shigeharu, Ibi-gun Gifu 501-0695 (JP)
(74) Representative: Hoffmann Eitle
(86) International application number: PCT/JP2012/075978
(87) International publication number: WO 2014/054169

(57) **Abstract**

The method for cutting a honeycomb dried body of the present invention includes a molding step to mold a ceramic raw material by continuous extrusion using an extruder into an uncut honeycomb molded body including a plurality of cells as fluid passages and cell walls defining the plurality of cells, a drying step to dry the uncut honeycomb molded body to obtain an uncut honeycomb dried body, and a cutting step to cut the uncut honeycomb dried body to a predetermined length. The molding step, the drying step, and the cutting step are continuously carried out in this order; and in the cutting step, the uncut honeycomb dried body is cut while a moving speed of a cutting member is synchronized with a moving speed of the uncut honeycomb molded body in the molding step.

## Description

### TECHNICAL FIELD

The present invention relates to a method for cutting a honeycomb dried body and a method for manufacturing a honeycomb structured body.

### BACKGROUND ART

Exhaust gas discharged from an internal combustion engine of vehicles (e.g., buses, trucks, and passenger cars) and construction machines contains particulates such as soot (hereinafter also referred to as PM). Adverse effects of the PM on the environment and human bodies have been recent issues.

To overcome this problem, various honeycomb structured bodies formed of porous ceramics have been proposed as filters to capture PM in the exhaust gas and purify the exhaust gas.

One example of methods for manufacturing a honeycomb structured body is described below.

First, a wet mixture (ceramic raw material) is prepared by mixing a ceramic powder, a binder, a liquid dispersion medium, and the like. The wet mixture is continuously extruded, and the extruded uncut molded body is then cut to a predetermined length using a wire or the like, whereby a rectangular pillar-shaped honeycomb molded body is obtained.

Next, the thus-obtained honeycomb molded body is dried. Subsequently, predetermined cells are plugged so that these cells are each plugged at one end. Then, a degreasing treatment and a firing treatment are carried out to obtain a honeycomb fired body.

Subsequently, a sealing material paste is applied to the lateral faces of each honeycomb fired body to adhere the honeycomb fired bodies to each other, whereby an aggregate body in which a plurality of honeycomb fired bodies are combined together via a sealing material layer (adhesive layer) is obtained. Next, the thus-obtained aggregate body of the honeycomb fired bodies is cut to a predetermined shape such as a round pillar shape so as to form a ceramic block. Lastly, the sealing material paste is applied to the outer periphery of the ceramic block to form a sealing material layer (peripheral coat layer), whereby a honeycomb structured body can be manufactured.

Patent Literature 1 discloses a technique in which a ceramic raw material is molded into a honeycomb molded body, and after the honeycomb molded body is dried, both ends of the honeycomb molded body is cut using a cutting disc (blade).

In addition, Patent Literature 2 discloses a technique of cutting a ceramic molded body using a device for cutting molded bodies. The device disclosed in Patent Literature 2 for cutting molded bodies includes a first conveying member that conveys an extruded uncut ceramic body having a pillar shape, a cutting member that cuts the ceramic body to a predetermined length, and a second conveying member that conveys the cut ceramic molded body. Prior to cutting the ceramic molded body, the conveying speed of the first conveying member is substantially the same as the moving speed of the cutting member in a direction parallel to the first conveying member; and after cutting the ceramic molded body, the ascending order of speed is as follows: the conveying speed of the first conveying member, the moving speed of the cutting member in the parallel direction, and the conveying speed of the second conveying member.

Furthermore, Patent Literature 3 discloses a technique in which a molded product is continuously formed by an extruder, the molded product is conveyed at the same speed as the extrusion speed, and the conveyed molded product is cut with a water jet cutter including a movable jet nozzle.

### CITATION LIST

### - Patent Literature

Patent Literature 1: JP-A 2007-320312
Patent Literature 2: JP-A 2008-168609
Patent Literature 3: JP-A 2004-358843

### SUMMARY OF INVENTION

### - Technical Problem

As disclosed in Patent Literature 2, even when a ceramic molded body (honeycomb molded body) is cut in such a manner that the moving speed of a cutting member (wire) in the parallel direction is set to substantially the same as the molding speed of the ceramic molded body, the honeycomb molded body may have a deformed end face with a downwardly-bent upper end.

The honeycomb molded body may also shrink from drying. Thus, as disclosed in Patent Literature 1, a deformed portion formed on an end face of the dried honeycomb molded body must be removed by cutting. While the length of the dried honeycomb molded body can be adjusted by cutting an end face of the dried honeycomb molded body, the disclosed technique has problems such as that the entire process for manufacturing a honeycomb structured body is long and that the material loss is large.

In addition, it was found that in the case of manufacturing a honeycomb molded body having an aperture ratio of 75% or more by the conventional method disclosed in Patent Literature 1, the extruded uncut molded body unfortunately buckles under its own weight, failing to maintain the honeycomb shape.

It was also found that vibration during cutting of the molded body or vibration or the like during conveyance of the molded body for drying unfortunately causes deformation of the honeycomb shape.

The present invention was accomplished to solve the above problems. The present invention aims to provide a method for cutting a honeycomb dried body and a method for manufacturing a honeycomb structured body, wherein the entire process for manufacturing a honeycomb structured body can be simplified and the material loss can be reduced.

The present invention also aims to provide, as preferred embodiments, a method for cutting a honeycomb dried body and a method for manufacturing a honeycomb structured body, wherein deformation of a honeycomb molded body can be suppressed.

### - Solution to Problem

The method for cutting a honeycomb dried body of the present invention includes:
a molding step to mold a ceramic raw material by continuous extrusion using an extruder into an uncut honeycomb molded body including a plurality of cells as fluid passages and cell walls defining the plurality of cells;
a drying step to dry the uncut honeycomb molded body to obtain an uncut honeycomb dried body; and
a cutting step to cut the uncut honeycomb dried body to a predetermined length,
the molding step, the drying step, and the cutting step being continuously carried out in this order, and
in the cutting step, the uncut honeycomb dried body being cut while a moving speed of a cutting member is synchronized with a moving speed of the uncut honeycomb molded body in the molding step.

In the method for cutting a honeycomb dried body of the present invention, an uncut honeycomb molded body is dried to obtain an uncut honeycomb dried body. Specifically, unlike the conventional method disclosed in Patent Literature 1, the honeycomb molded body is dried before cutting. This makes it possible to manufacture a honeycomb dried body having a predetermined length by single cutting. Thus, the entire process for manufacturing a honeycomb structured body can be simplified.

In addition, in the case of using the method for cutting a honeycomb dried body of the present invention, unlike the conventional method disclosed in Patent Literature 1, removal of a deformed portion of an end face is not necessary so that the material loss can be reduced.

The manufacturing of a honeycomb fired body having a predetermined longitudinal length may involve cutting one of the following honeycomb bodies: honeycomb molded body, honeycomb dried body, and honeycomb fired body. Among these, the honeycomb dried body is most appropriate for cutting.

In the case of cutting the honeycomb molded body, deformation occurs after cutting, so that cutting must be carried out again after the drying step, as disclosed in Patent Literature 1.

In the case of cutting the honeycomb fired body, it is difficult to introduce a continuously extruded honeycomb molded body or honeycomb dried body directly into a firing furnace without cutting. In addition, the manufacturing of a honeycomb fired body having plugged cells involves plugging of both end faces after cutting the honeycomb fired body, and the plugged portions must be fired again. Moreover, because the honeycomb fired body is a hard material made of sintered ceramics, the cutting requires a large amount of energy, which increases the wear of a cutting tool.

In the case of cutting the honeycomb dried body, a honeycomb dried body having a predetermined length can be obtained by single cutting, and plugging can be applied to both end faces of the cut honeycomb dried body.

Further, in the case of manufacturing a honeycomb molded body having an aperture ratio of 75% or more, the method for cutting a honeycomb dried body of the present invention can dry the honeycomb molded body before the honeycomb shape is deformed by its own weight or by vibration or the like during cutting or conveyance of the molded body. Thus, deformation of the honeycomb dried body can be suppressed, and the strength of the honeycomb dried body can be maintained.

The method for cutting a honeycomb dried body of the present invention is characterized in that the uncut honeycomb dried body (i.e., the honeycomb dried body that has shrunk from drying) is cut while the moving speed of the cutting member is synchronized with the moving speed of the honeycomb molded body in the molding step. Thus, the honeycomb dried body having a predetermined length can be efficiently manufactured.

In the method for cutting a honeycomb dried body of the present invention, preferably, in the molding step, the moving speed of the uncut honeycomb molded body extruded from the extruder is measured by a speed sensor; and in the cutting step, a moving speed of the cutting member in a direction parallel to a moving direction of the uncut honeycomb dried body is set to be the same as a moving speed measured by the speed sensor.

In this case, the honeycomb dried body can be cut in such a manner that the cut surface is perpendicular to the longitudinal direction of the honeycomb dried body.

In the method for cutting a honeycomb dried body of the present invention, preferably, the uncut honeycomb dried body is cut with a water jet in the cutting step to cut.

Water jet cutting, which is a high-energy density process, hardly deforms the cut surface of the honeycomb dried body, and can cut with high precision.

In addition, in the case of cutting with a water jet, the cutting device is lighter and the cutting speed is higher, compared to the case of cutting with a blade. Thus, the cutting step and the molding step can be easily synchronized.

In the method for cutting a honeycomb dried body of the present invention, a relationship where V₂' = V₁/cos φ is preferably satisfied in the cutting step, wherein φ is an angle between a moving direction of a jet nozzle for the water jet and a moving direction of the uncut honeycomb dried body; V₁ is a moving speed of the uncut honeycomb dried body; and V₂' is a moving speed of the jet nozzle.

In this case, the honeycomb dried body can be cut in such a manner that the cut surface is perpendicular to the longitudinal direction of the honeycomb dried body.

In the method for cutting a honeycomb dried body of the present invention, preferably, the uncut honeycomb molded body is dried by high-frequency dielectric drying in the drying step.

High-frequency dielectric drying is carried out by passing an electric current between opposite electrode plates disposed above and below or right and left of the honeycomb molded body so as to move water molecules in the honeycomb molded body by high-frequency wave energy, thus generating frictional heat.

In the case of high-frequency dielectric drying, similar to microwave drying, the object itself acts as a heating element and can heat itself. At the same time, the half-power depth (the distance at which the power density of the emitted electromagnetic wave is reduced by half) of the high-frequency wave is greater than that of the microwave. Thus, the honeycomb molded body can be uniformly dried even to the inside. In addition, high-frequency dielectric drying allows local heating, so that the drying equipment can be shortened, and the drying equipment can be further simplified because it only requires a simple electromagnetic shield.

In the method for cutting a honeycomb dried body of the present invention, the honeycomb dried body preferably has a moisture content of 0 to 6% by mass.

If the honeycomb dried body has a moisture content of more than 6% by mass, the shape of the honeycomb dried body will be difficult to maintain. This tendency is remarkable particularly in the case of manufacturing a honeycomb molded body having an aperture ratio of 75% or more.

In the method for cutting a honeycomb dried body of the present invention, the honeycomb dried body preferably has an aperture ratio of 60 to 90%.

As described above, in the method for cutting a honeycomb dried body of the present invention, deformation of a honeycomb dried body can be suppressed even if the honeycomb dried body has a high aperture ratio.

The method for manufacturing a honeycomb structured body of the present invention is a method for manufacturing a honeycomb structured body including a honeycomb fired body including a plurality of cells as fluid passages and cell walls defining the plurality of cells,
the method including a firing step to fire a honeycomb dried body having a predetermined length obtained by the method for cutting a honeycomb dried body of the present invention to obtain the honeycomb fired body.

### BRIEF DESCRIPTION OF DRAWINGS

Fig. 1 is a side view schematically showing one example of a method for cutting a honeycomb dried body according to an embodiment of the present invention.
Fig. 2 is a perspective view schematically showing one example of the shape of the honeycomb dried body.
Fig. 3 is a cross-sectional view schematically showing one example of a jet nozzle portion of a water jet cutter that can be used in an embodiment of the present invention.
Fig. 4(a), Fig. 4(b), and Fig. 4(c) are side views each schematically showing one example of the cutting step in an embodiment of the present invention.
Fig. 5 is a plan view schematically showing one example of the cutting step in an embodiment of the present invention.
Fig. 6 is a conceptual view showing the operation of a jet nozzle of a water jet cutter.
Fig. 7 (a) is a perspective view schematically showing one example of the honeycomb fired body obtainable by the method for manufacturing a honeycomb structured body according to an embodiment of the present invention. Fig. 7(b) is a cross-sectional view along line A-A of the honeycomb fired body shown in Fig. 7(a).
Fig. 8 is a perspective view schematically showing one example of the honeycomb structured body obtainable by the method for manufacturing a honeycomb structured body according to an embodiment of the present invention.

### DESCRIPTION OF EMBODIMENTS

Embodiments of the present invention are specifically described below. The present invention, however, is not limited to these embodiments below and can be suitably modified without departing from the scope of the present invention.

The method for cutting the honeycomb dried body according to the embodiment of the present invention includes:
a molding step to mold a ceramic raw material by continuous extrusion using an extruder into an uncut honeycomb molded body including a plurality of cells as fluid passages and cell walls defining the plurality of cells;
a drying step to dry the uncut honeycomb molded body to obtain an uncut honeycomb dried body; and
a cutting step to cut the uncut honeycomb dried body to a predetermined length,
the molding step, the drying step, and the cutting step being continuously carried out in this order, and
in the cutting step, the uncut honeycomb dried body being cut while a moving speed of a cutting member is synchronized with a moving speed of the uncut honeycomb molded body in the molding step.

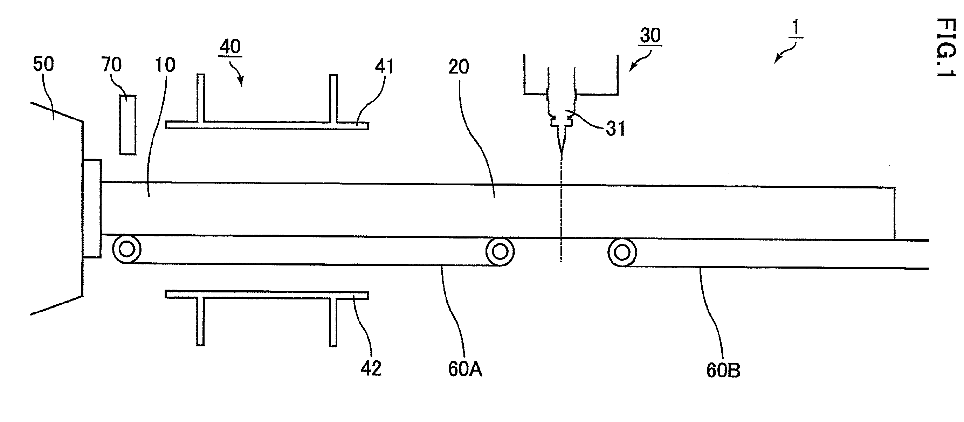

Fig. 1 is a side view schematically showing one example of the method for cutting a honeycomb dried body according to the embodiment of the present invention.

In present embodiment, for example, a molding-drying-cutting apparatus can be used in which an extruder, a high-frequency dielectric dryer, a water jet cutter as a cutting member, and a conveyor are assembled together.

A molding-drying-cutting apparatus 1 shown in Fig. 1 includes an extruder 50, a high-frequency dielectric dryer 40, a water jet cutter 30, a first conveyor 60A, and a second conveyor 60B. In addition, the molding-drying-cutting apparatus 1 includes a speed sensor 70 for measuring the speed of a honeycomb molded body extruded from the extruder. The speed sensor 70 preferably measures the speed immediately after extrusion.

### (Molding step)

First, a ceramic raw material is continuously extruded from the extruder to obtain an uncut honeycomb molded body.

The extruder 50 shown in Fig. 1 includes a die at its end, and continuously extrudes a honeycomb molded body 10 having a certain shape according to the die shape.

The extruded honeycomb molded body 10 is placed on the first conveyor 60 and moves in an extrusion direction along the moving direction of the first conveyor 60A.

The moving speed of the first conveyor (the moving speed of the honeycomb molded body) is the same as the extrusion speed.

The honeycomb molded body is formed by extruding a wet mixture (a ceramic raw material) containing a ceramic powder, an organic binder, a forming auxiliary, water, and the like. The honeycomb molded body has a high moisture content of 10 to 25% by weight.

The honeycomb molded body obtained by molding in the present embodiment is a honeycomb molded body including a plurality of cells as fluid passages and cell walls defining the plurality of cells. The shape of the honeycomb molded body is the same as that of a honeycomb dried body, which is described in detail later.

In the present embodiment, the extrusion speed is not particularly limited, and is preferably 1 to 10 m/min, more preferably 2 to 7 m/min.

### (Drying step)

Next, the drying step is carried out in which the honeycomb molded body obtained in the molding step is dried to obtain a honeycomb dried body.

No cutting step is involved between the molding step and the drying step. Thus, the honeycomb dried body obtainable in the drying step is an uncut honeycomb dried body.

In Fig. 1, the high-frequency dielectric dryer 40 is disposed in the moving direction of the honeycomb molded body 10 from the extruder 50. The high-frequency dielectric dryer 40 includes an upper electrode 41 and a lower electrode 42 disposed such that the honeycomb molded body 10 as the object to be heated is conveyed between these electrodes.

In high-frequency dielectric drying, a high-frequency wave is applied to the honeycomb molded body which is between the electrodes. This excites water molecules in the honeycomb molded body and generates frictional heat. As a result, the honeycomb molded body is dried into a honeycomb dried body.

Fig. 1 shows the high-frequency dielectric dryer 40 in which one electrode is above and one electrode is below the honeycomb molded body 10. The electrodes do not have to be located above and below the honeycomb molded body. There is no limitation as long as the honeycomb molded body is conveyed between the electrodes. For example, two (a pair) electrodes may be disposed on the lateral sides (one on left and one on right) of the honeycomb molded body.

As shown in Fig. 1, the extruded honeycomb molded body 10 moves sequentially and continuously through the high-frequency dielectric dryer 40 by the first conveyor 60A.

The high-frequency dielectric dryer 40 preferably includes a discharging means (not shown) that discharges water vapor that has evaporated from the honeycomb molded body 10 to the outside of the drying space. Thereby, the humidity in the atmosphere of the drying space can be maintained at a constant level. In addition, the discharging means that discharges water vapor may be disposed downstream of the cutter 30 in order to discharge water vapor present in the honeycomb dried body.

The frequency that can be used for high-frequency dielectric drying is 13.56 MHz, 27.12 MHz, or 40.68 MHz, with 13.56 MHz being particularly preferred. A wave with a frequency of 13.56 MHz has a long wavelength, which allows uniform drying of the honeycomb molded body.

The output of high-frequency dielectric drying is not particularly limited, and is preferably 0.5 to 60 kW, more preferably 3 to 50 kW, particularly preferably 6 to 45 kW.

If the output of high-frequency dielectric drying is less than 0.5 kW, the honeycomb molded body cannot be sufficiently dried, which tends to cause deformation of the honeycomb dried body, and the molding speed must be significantly reduced; or the drying equipment must be extended, which reduces the effect of shortening the entire process. In contrast, if the output of high-frequency dielectric drying is more than 60 kW, the moisture in the honeycomb molded body tends to rapidly evaporate. Once the moisture in the honeycomb molded body is lost, organic matter starts to vibrate, resulting in an excessive increase in the temperature. Thus, the honeycomb molded body may be burned in some cases.

In the case of high-frequency dielectric drying, the electrode length in the longitudinal direction of the honeycomb molded body can be determined in view of the degree to which the amount of water in the dried honeycomb dried body is reduced, the moving speed of the conveyor, the applied voltage, and the like. For example, the electrode length is preferably 0.4 to 7.0 m, more preferably 1.0 to 5.0 m. If the electrode length is less than 0.4 m, the molding speed must be excessively slowed down in order to sufficiently dry the honeycomb molded body even if the output of the high-frequency wave is increased. In contrast, if the electrode length is more than 7.0 m, it will reduce the effect of shortening the entire process.

The number of electrodes in the high-frequency dielectric dryer may not be two (one above and one below, or one on left and one on right of the honeycomb molded body). Two electrodes (one above and one below, or one on left and one on right of the honeycomb molded body) may form a pair, and two pairs or more of electrodes may be disposed.

In the case where two or more pairs of electrodes are disposed, the applied voltage may be varied for each pair of the electrodes, whereby more specific drying conditions can be set.

Also in the drying step, the moving speed of the conveyor (the moving speed of the first conveyor) is the same as the extrusion speed.

The electrode is preferably plate-shaped, and its size is not limited. For example, a rectangular-shaped electrode having size of 0.4 to 7 m (length) x 30 to 100 mm (width) is preferred.

The electrode width is preferably equal to 1 to 3 times the width of the honeycomb molded body. If the electrode width is less than 1 time, or more than 3 times the width of the honeycomb molded body, the dry state of the honeycomb dried body tends to be non-uniform.

In addition, the distance between the electrode and the honeycomb molded body is preferably 1 to 30 mm. In particular, the distance between the electrode and the honeycomb molded body is preferably 1 to 15 mm. If the distance between the electrode and the honeycomb molded body is less than 1 mm, a short circuit will occur due to a contact between the honeycomb molded body and the electrode. In contrast, if the distance is more than 30 mm, the output must be increased.

In the present embodiment, the drying step is preferably carried out using high-frequency dielectric drying. Yet, the method for drying an uncut honeycomb molded body is not limited thereto. Examples of methods for drying an uncut honeycomb molded body other than high-frequency dielectric drying include microwave drying, hot-air drying, and freeze drying. These drying methods may be used alone or in combination.

In the drying step, the honeycomb dried body is preferably dried to a moisture content of 0 to 6% by mass, more preferably 0 to 1% by mass.

Herein, "the moisture content of the honeycomb dried body" can be calculated as follows: the amount of water in the honeycomb dried body immediately after the drying step is determined from the difference between the mass of the honeycomb dried body immediately after the drying step and the mass of the honeycomb dried body in an absolute dry state; and the determined amount of water is divided by the mass of the entire honeycomb dried body immediately after the drying step. In addition, the moisture content of the honeycomb dried body can be measured by a heating and drying method moisture analyzer (MX-50 available from A&D Company, Limited).

If the moisture content of the honeycomb dried body is more than 6% by mass, the shape of the honeycomb dried body will be difficult to maintain. This tendency is remarkable particularly in the case of manufacturing a honeycomb molded body having an aperture ratio of 75% or more. If the moisture content of the honeycomb dried body is 1% by mass or less, there is no need to dry the honeycomb dried body again after the cutting step, so that the entire process can be further shortened.

In the present embodiment, the drying time can be determined in view of the degree to which the amount of water in the dried honeycomb dried body is reduced, the applied voltage, and the like. The drying time is preferably 0.5 to 5 minutes, more preferably 1 to 3 minutes.

If the drying time is less than 0.5 minutes, drying tends to be insufficient even if the output is increased. In contrast, if the drying time is more than 5 minutes, drying proceeds too much, which tends to cause warpage or cracks in the honeycomb dried body. In addition, the entire process will be long.

In the present embodiment, the drying temperature is preferably 80°C to 130°C, more preferably 85°C to 120°C.

If the drying temperature is lower than 80°C, drying tends to be insufficient. In contrast, if the drying temperature is higher than 130°C, drying proceeds too rapidly, which tends to cause warpage or cracks in the honeycomb dried body.

In the present embodiment, the distance from the tip end of the die of the extruder to where drying of the uncut honeycomb molded body starts is preferably 0 to 300 mm. The upper limit of the distance is more preferably 200 mm. The lower limit of the distance may be 10 mm or 30 mm.

If the distance is more than 300 mm, the uncut honeycomb molded body tends to be easily deformed. The tendency is remarkable particularly in the case of manufacturing a honeycomb molded body having an aperture ratio of 75% or more.

In the present embodiment, the honeycomb molded body and/or the honeycomb dried body is preferably dried while being inclined at an angle such that a side thereof facing the extruder is lower. Specifically, the honeycomb molded body and/or the honeycomb dried body is preferably dried while being inclined with respect to the horizontal plane in such a manner that the side facing the extruder is lower and the side to be cut is upper.

In this manner, water vapor in the cells of the honeycomb dried body, which is generated during the drying step, can be easily discharged from the honeycomb dried body through the end to be cut in the longitudinal direction, and re-liquefaction of the water vapor in the cells can thus be prevented.

In the above case, the angle between the lower face of the honeycomb molded body and/or the honeycomb dried body and the horizontal plane is preferably 5 to 30°.

If the angle is less than 5°, water vapor may not be sufficiently discharged in the case where the interval between the drying step and the cutting step is long. If the angle is more than 30°, the honeycomb molded body will be conveyed by the conveyor at a lower conveying speed, and the honeycomb dried body will be easily distorted due to an inconsistency between the conveying speed and the extrusion speed in the molding step.

The following description is intended to describe one example of the shape of the honeycomb dried body to be cut by the method for cutting a honeycomb dried body of the present invention, with reference to the figures.

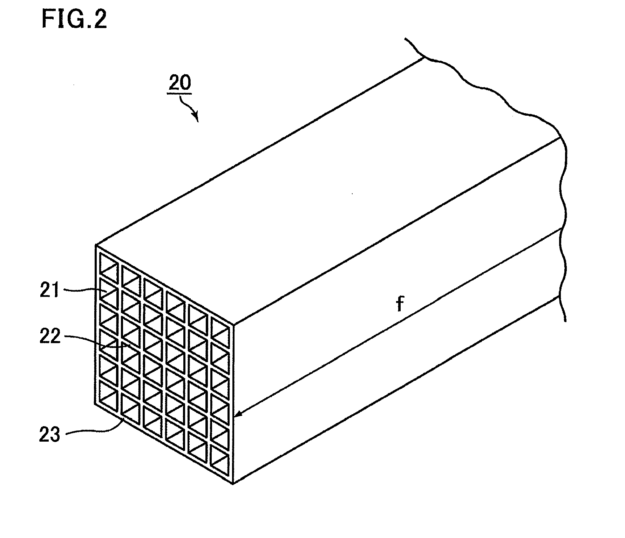

Fig. 2 is a perspective view schematically showing one example of the shape of the honeycomb dried body.

A honeycomb dried body 20 shown in Fig. 2 is an uncut honeycomb dried body including a plurality of cells 21 arranged side by side in the longitudinal direction (in the direction of an arrow f in Fig. 2) with cell walls 22 between the cells, and an outer wall 23 formed on the periphery. In the honeycomb dried body 20, ends of the cells 21 are not plugged.

In Fig. 2, one end of the honeycomb dried body is omitted to indicate that the honeycomb dried body is an uncut honeycomb dried body.

The composition of the honeycomb dried body is the same as that of the honeycomb molded body, and preferably contains a ceramic powder, an organic binder, a forming auxiliary, water, and the like. The moisture content is preferably 0 to 6% by mass after the water is removed in the drying step.

As for the ceramic powder, examples of ceramics include powder of carbide ceramics such as silicon carbide, titanium carbide, tantalum carbide, and tungsten carbide; powder of nitride ceramics such as aluminum nitride, silicon nitride, boron nitride, and titanium nitride; powder of oxide ceramics such as alumina, zirconia, cordierite, mullite, and aluminum titanate; and powder of silicon-containing silicon carbide. Among these, powder of silicon carbide or silicon-containing silicon carbide is preferred because it is excellent in heat resistance, mechanical strength, thermal conductivity, and the like.

The silicon-containing silicon carbide is a mixture of silicon carbide and silicon metal, and preferably contains 60 wt% or more of silicon carbide.

Any organic binder may be used, and examples thereof include methyl cellulose, carboxymethyl cellulose, hydroxyethyl cellulose, and polyethylene glycol. Among these, methyl cellulose is preferred. Usually, the organic binder content is preferably 1 to 10 parts by weight relative to 100 parts by weight of ceramic powder.

Any forming auxiliary may be used, and examples thereof include ethylene glycol, dextrin, fatty acids, fatty acid soap, and polyalcohol.

The honeycomb dried body may contain a plasticizer or a lubricant. Any plasticizer may be used, and examples thereof include glycerin. The lubricant is also not particularly limited, and examples thereof include polyoxyalkylene-based compounds such as polyoxyethylene alkyl ether and polyoxypropylene alkyl ether.

Further, the honeycomb dried body may contain, as needed, a pore-forming agent such as balloons (i.e., fine hollow spheres formed from oxide-based ceramics), spherical acrylic particles, or graphite.

In the present embodiment, in the case where a water jet is used in the cutting step described later, the honeycomb dried body preferably contains organic matter such as an organic binder and a forming auxiliary because the organic matter leads to a reduced surface tension on the surface of the honeycomb dried body, which causes water to be repelled during water jet cutting, thus suppressing penetration of water through the cell walls.

In addition, the honeycomb dried body is not a porous body because it is not fired. Thus, the honeycomb dried body includes no pores communicating with the cell walls, suppressing penetration of water through the cell walls during water jet cutting.

This allows the honeycomb dried body that has been cut by a water jet to maintain the substantially same moisture content as that of the uncut honeycomb dried body.

The shape of the honeycomb dried body is not limited to the quadrangular pillar shape as shown in Fig. 2. It may be another polygonal pillar shape, an elliptical pillar shape, a trapezoidal shape (the cross section is trapezoidal), a fan shape (the cross section is fan-shaped), or the like.

In addition, the cell shape is also not limited to the one having a square cross section. The cell shape may be polygonal (for example, quadrangular, pentagonal, hexagonal, or octagonal), circular, or elliptical. Further, a single honeycomb dried body may include cells of different shapes (for example, a combination of square-shaped cells and octagonal-shaped cells).

### (Cutting step)

Subsequently, the cutting step is carried out in which the uncut honeycomb dried body is cut to a predetermined length.

A honeycomb dried body having a predetermined length can be obtained by the cutting step.

In the present embodiment, the method for cutting the uncut honeycomb dried body is not particularly limited. For example, the uncut honeycomb dried body can be cut with a cutting member such as water jet, blade, wire saw, ultrasonic cutter, nichrome wire, fiber laser, or microjet laser.

Among these, it is preferred to use a water jet to cut the uncut honeycomb dried body. Fig. 1 shows the water jet cutter 30 as an example of the cutting member.

Water jet cutting, which is a high-energy density process, hardly deforms the cut surface of the honeycomb dried body, and can cut with high precision.

In addition, in the case of cutting with a water jet, the cutting device is lighter and the cutting speed is higher, compared to the case of cutting with a blade. Thus, the cutting step and the molding step can be easily synchronized.

The cutting step in which an uncut honeycomb dried body is cut to a predetermined length with a water jet is described below.

The uncut honeycomb dried body that underwent the drying step is cut to a predetermined length with a water jet cutter.

A water jet cutter is a device capable of crushing and cutting by the impact of high-pressure water, and jets high-pressure water from a jet nozzle located at the tip end.

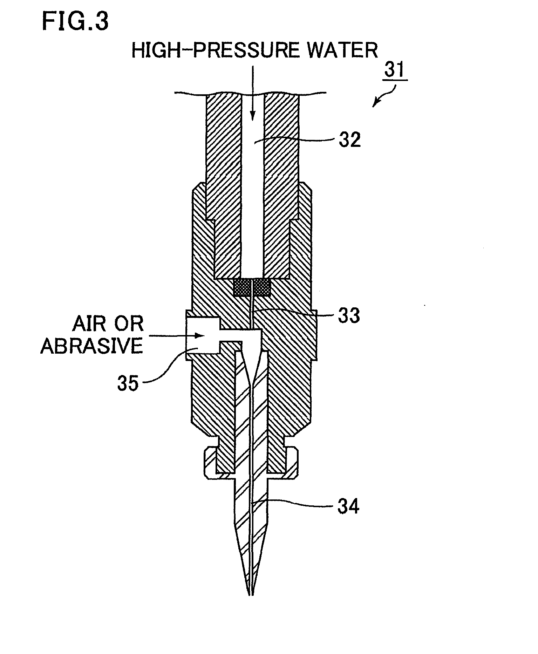

Fig. 3 is a cross-sectional view schematically showing one example of a jet nozzle portion of the water jet cutter that can be used in the embodiment of the present invention.

Fig. 3 schematically shows a jet nozzle 31 of the water jet cutter 30, including a high-pressure water inlet 32, a water nozzle 33, a lower nozzle 34, and an air/abrasive inlet 35.

High-pressure water is introduced from the high-pressure water inlet 32, flows through the water nozzle 33, and is jetted from the lower nozzle 34. Air or an abrasive may be introduced from the air/abrasive inlet 35. The abrasive can be effectively used when the object to be cut is hard, and garnet or the like can be used as the abrasive.

The water pressure of water jetted from the jet nozzle is preferably 200 to 400 MPa.

If the water pressure of the water jet is 200 to 400 MPa, the formation of burrs on the cut surface or clogging of the ceramic powder in the cells can be effectively reduced, resulting in a clean cut surface.

The flow rate of water jetted is preferably 600 to 900 m/sec.

If the flow rate of water is 600 to 900 m/sec, the formation of burrs on the cut surface or clogging of the ceramic powder in the cells can be effectively reduced, resulting in a clean cut surface.

The jet nozzle of the water jet cutter moves, while jetting water, across a cross section perpendicular to the longitudinal direction of the honeycomb dried body (i.e., the jet nozzle moves in a front-to-back or back-to-front direction of the plane of Fig. 1) to cut the honeycomb dried body in a direction perpendicular to the longitudinal direction of the honeycomb dried body. Thereby, a honeycomb dried body having a predetermined longitudinal length can be obtained.

The water jet cutter includes a drive mechanism (not shown) capable of moving the position of the jet nozzle.

The cutting speed by a water jet is preferably 15 to 150 mm/sec.

The cutting speed of 15 to 150 mm/second is effective in that the cutting step is prevented from becoming the rate controlling factor in the manufacturing process of the honeycomb structured body, thus not interfering with the production efficiency.

The cutting speed can be adjusted by adjusting the moving speed of the jet nozzle.

The angle between the jet nozzle for the water jet and the upper face of the honeycomb dried body is preferably 5 to 85° throughout the cutting step. The angle is more preferably 10 to 80°, still more preferably 15 to 75°.

In addition, the angle between the jet nozzle for the water jet and all the cell walls in a cross section perpendicular to the longitudinal direction of the honeycomb dried body is preferably 5 to 85°. The angle is more preferably 10 to 80°, still more preferably 15 to 75°.

The angle between the jet nozzle for the water jet and the upper face and cell walls of the honeycomb dried body is set in the range of 5 to 85°. This means that the direction of the water jet flow will not be parallel to the direction of the outer wall or the direction of the cell walls of the honeycomb dried body, and that the direction of water jet flow is tilted by at least 5°.

The direction of the water jet flow is tilted to the directions of the outer wall and the cell walls of the honeycomb dried body. This makes it possible to reduce the range of variation in the total thickness of the walls to be cut (the amount of cutting) at one time, thus allowing stable cutting.

The angle between the jet nozzle for the water jet and the upper face of the honeycomb dried body is defined as the smaller angle, which is closer to the honeycomb dried body, between the angles formed by the jet nozzle for the water jet and the upper face of the honeycomb dried body. The upper face of the honeycomb dried body refers to the plane of the honeycomb dried body where the water jet hits.

In addition, the angle between the jet nozzle for the water jet and the cell walls is defined as the smaller angle between the angles formed by the jet nozzle for the water jet and the cell walls. The direction of the cell walls is the direction of a line connecting repeated structures of cell walls having the same positional relationship relative to the cells in a cross section perpendicular to the longitudinal direction of the honeycomb dried body.

The angle between the jet nozzle for the water jet and the upper face of the honeycomb dried body and the angle between the jet nozzle for the water jet and all the cell walls in a cross section perpendicular to the longitudinal direction of the honeycomb dried body can be adjusted by the following method, for example: a quadrangular pillar-shaped honeycomb dried body is conveyed on a conveyor having a face substantially parallel to the ground surface, and the jet nozzle of the water jet cutter is tilted at a certain angle from the direction perpendicular to the ground surface.

The distance between the jet nozzle for the water jet and the upper face of the honeycomb dried body is preferably 1 to 10 mm. The water jet tends to spread as the distance from the nozzle increases. With the above distance in a range of 1 to 10 mm, it is possible to increase the flatness of the cut surface of the honeycomb dried body.

In the cutting step, multiple jet nozzles may be used simultaneously so that a plurality of honeycomb dried bodies can be obtained by a single cutting operation.

For example, after an uncut honeycomb dried body having a length corresponding to two honeycomb dried bodies each having a predetermined length is obtained, the honeycomb dried body can be cut simultaneously at two points at the same time in the cutting step.

In addition, multiple jet nozzles may be used to one cut surface of the honeycomb dried body. In this case, the length to be cut (cutting length) by the water jet from one nozzle can be reduced, so that the cutting time can be reduced. This effect is remarkable particularly in the case where the jet nozzles are tilted because the cutting length varies in different portions.

In the present embodiment, the molding step, the drying step, and the cutting step are continuously carried out in this order. Thus, in the case where a molding-drying-cutting apparatus including conveyors (a first conveyor and a second conveyor) as shown in Fig. 1 is used, the conveyors are driven during the cutting step so that the uncut honeycomb dried body is moving at the moving speed of the conveyors.

In the cutting step, the uncut honeycomb dried body is cut while the moving speed of the cutting member (e.g., the jet nozzle of the water jet cutter) is synchronized with the moving speed of the honeycomb molded body in the molding step.

At this point, preferably, the moving speed of the honeycomb molded body extruded from the extruder is measured by the speed sensor in the molding step; and in the cutting step, the moving speed of the cutting member that moves in a direction parallel to the moving direction of the uncut honeycomb dried body is set to be the same as the moving speed measured by the speed sensor.

Thereby, these moving speeds can be precisely synchronized with each other, and the honeycomb dried body can be cut in such a manner that the cut surface is perpendicular to the longitudinal direction of the honeycomb dried body.

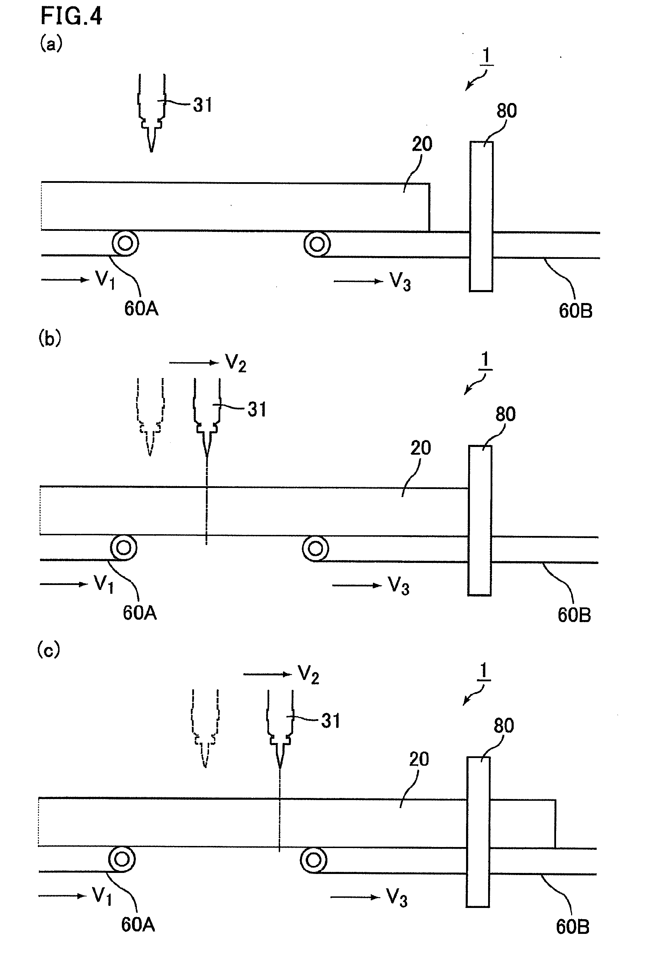

Fig. 4(a), Fig. 4(b), and Fig. 4(c) are side views each schematically showing one example of the cutting step in the embodiment of the present invention.

Fig. 4(a), Fig. 4(b), and Fig. 4(c) show the jet nozzle 31 of the water jet cutter as an example of the cutting member.

First, as shown in Fig. 4(a), the uncut honeycomb dried body 20 that underwent the drying step moves on the first conveyor 60A having a moving speed V₁.

Herein, the moving speed (the moving speed of the first conveyor 60A) V₁ of the uncut honeycomb dried body 20 is the same as the moving speed of the honeycomb molded body in the molding step and is also the same as the extrusion speed. For example, the moving speed of the honeycomb molded body 10 extruded from the extruder 50 is measured by the speed sensor 70 shown in Fig. 1, and the measured moving speed of the honeycomb molded body 10 can be adjusted to be the same as the moving speed V₁ of the first conveyor 60A.

In addition, the second conveyor 60B moves the uncut honeycomb dried body 20 at a moving speed V₃ that is the same as the moving speed V₁ of the first conveyor 60A.

Meanwhile, the jet nozzle 31 remains at the original position before cutting.

The operations of the first conveyor 60A and the second conveyor 60B can be individually controlled.

Next, as shown in Fig. 4 (b), once the tip end of the uncut honeycomb dried body 20 reaches the position of a passage sensor 80, the passage sensor 80 detects the passage of the uncut honeycomb dried body 20, and sends a passage start signal at the same time as the passages starts to a cutting controlling means (not shown) that controls the operation of the jet nozzle 31. Upon receipt of the passage start signal by the cutting controlling means, the jet nozzle 31 starts operating.

Once the jet nozzle 31 starts operating, the jet nozzle 31 moves, while jetting water, in a direction parallel to the moving direction of the first conveyor 60A (specifically, the moving direction of the honeycomb dried body 20) and also moves across the cross section perpendicular to the longitudinal direction of the uncut honeycomb dried body 20 (for example, the jet nozzle moves in a front-to-back direction of the plane of Fig. 4 (b)); and then starts cutting the honeycomb dried body 20.

Herein, in regard to the speed of the jet nozzle 31, a speed V₂ of the jet nozzle 31 in a direction parallel to the moving direction of the uncut honeycomb dried body 20 is the same as the moving speed V₁ of the first conveyor 60A. Specifically, the speed V₂ is the same as the moving speed of the honeycomb molded body 10 which is measured by the speed sensor 70.

Thus, the jet nozzle 31 cuts the honeycomb dried body 20 in a direction perpendicular to the longitudinal direction of the honeycomb dried body 20 by jetting water while maintaining synchronization with the movement of the uncut honeycomb dried body 20.

In the molding-drying-cutting apparatus 1, the jet nozzle 31 starts operating as the cutting controlling means receives a passage start signal that is sent upon the passage of the uncut honeycomb dried body 20 through the passage sensor 80. Thus, the distance between the passage sensor 80 and the jet nozzle 31 at the time when the cutting controlling means receives a passage start signal is the length of the cut honeycomb dried body (hereinafter also referred to as the cutting length).

Thus, the cutting length can be changed to any length by changing the position of the passage sensor 80. For example, the cutting length can be reduced by disposing the passage sensor 80 at a position near the extruder 50.

As described above, until cutting of the honeycomb dried body 20 is completed, the moving speed V₁ of the first conveyor 60A, the moving speed V₂ of the jet nozzle 31 in a direction parallel to the movement of the honeycomb dried body 20, and moving speed V₃ of the second conveyor 60B preferably satisfy the following relationship: V₁ = V₂ = V₃.

As shown in Fig. 4(c), cutting of the honeycomb dried body is completed when the jet nozzle 31 is finished moving across the cross section perpendicular to the longitudinal direction of the honeycomb dried body 20.

While the honeycomb dried body is being cut, the honeycomb dried body is preferably held from the lateral sides (right and left sides) by clamps (not shown) interlocked with the molding-drying-cutting apparatus 1.

For example, the timing at which clamping of the honeycomb dried body starts and finishes can be controlled in accordance with the moving speed of the honeycomb molded body 10 measured by the speed sensor 70.

In addition, after cutting of the honeycomb dried body 20 is completed, the moving speed V₁ of the first conveyor 60A and the moving speed V₃ of the second conveyor 60B preferably satisfy the following relationship: V₁ < V₃.

In this case, the completely cut honeycomb dried body can be immediately moved so that the honeycomb dried body can be continuously and smoothly cut.

At the point when cutting of the honeycomb dried body 20 by the jet nozzle 31 is completed, the water jet cutter 30 detects that cutting is completed (for example, the water jet cutter 30 detects that cutting is completed as the jet nozzle 31 finished moving across the cross section perpendicular to the longitudinal direction of the honeycomb dried body 20), stops jetting water, and starts moving back to its original position. Further, the water jet cutter 30 sends a cutting complete signal to a moving control means (not shown) that controls the moving operation of the second conveyor 60B. Upon receipt of the cutting complete signal, the moving control means changes the moving speed V₃ of the second conveyor 60B to satisfy the following speed relationship: V₁ < V₃.

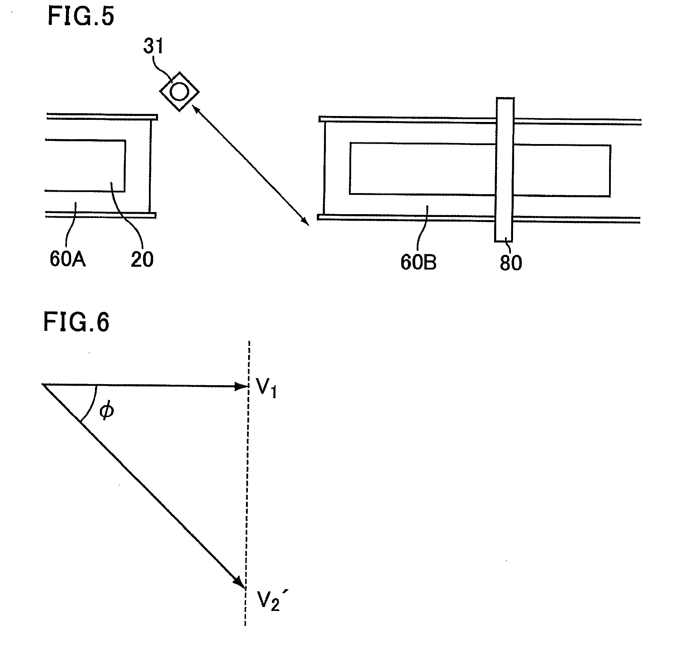

Fig. 5 is a plan view schematically showing one example of the cutting step in the embodiment of the present invention.

As shown in Fig. 5, the jet nozzle 31 is disposed at a predetermined angle relative to the moving direction of the honeycomb dried body 20, and can move back and forth in this direction.

Fig. 6 is a conceptual view showing the operation of the jet nozzle of the water jet cutter.

As shown in Fig. 6, until cutting of the honeycomb dried body 20 is completed, the angle φ between the moving direction of the jet nozzle and the moving direction of the honeycomb dried body, the moving speed V₁ of the honeycomb dried body, and the moving speed V₂' of the jet nozzle preferably satisfy the following relationship: V₂' = V₁/cos φ. In other words, it is desirable to satisfy the following relationship: V₁ = V₂' cos φ. In this case, the honeycomb dried body can be cut in such a manner that the cut surface is perpendicular to the longitudinal direction of the honeycomb dried body.

The angle φ is not particularly limited, yet, it is preferably 10 to 65°, more preferably 15 to 55°.

The case where the uncut honeycomb dried body is cut with a water jet as the cutting member has been described, but cutting with a different cutting member can be carried out in the same manner.

For example, in the case of using a fiber laser or a microjet laser as the cutting member, the moving speed of the cutting member can be synchronized with the moving speed of the honeycomb molded body in the molding step by the same manner as in the case of cutting with a water jet. In addition, in the case of using a blade, wire saw, or ultrasonic cutter as the cutting member, the cutting member moves in a direction parallel to the moving direction of the first conveyor and also moves vertically downward, so that the moving speed of the cutting member can be synchronized with the moving speed of the honeycomb molded body in the molding step.

The case where the completely cut honeycomb dried body is moved by the second conveyor has been described.

However, the present embodiment is not limited to the case as long as the molding step, the drying step, and the cutting step are continuously carried out in this order. For example, the completely cut honeycomb dried body may be collected temporarily before subsequent steps are carried out.

The cut honeycomb dried body obtained by the method for cutting a honeycomb dried body of the present embodiment is excellent in terms of flatness, and the cut surface obtained by water jet cutting can has a flatness of 0.2 mm or less. The flatness can be measured using a 3D measuring machine (for example, BH-V507 available from Mitsutoyo Corporation). Alternatively, a flat plate is pressed against the cut surface obtained by water jet cutting to measure the distance between the surface of the flat plate and the cut surface at nine points; a hypothetical least squares plane is determined based on the measured distances; and the difference between the maximum and minimum distances between the hypothetical plane and the measurement points is determined, whereby the flatness can be calculated.

In addition, the cut honeycomb dried body obtained by the method for cutting a honeycomb dried body of the present embodiment preferably has an aperture ratio of 60 to 90%, more preferably 75 to 90%.

In this case, deformation of a honeycomb dried body can be suppressed even if the honeycomb dried body has a high aperture ratio.

Herein, "the aperture ratio of the honeycomb dried body" can be calculated as follows: the open area at the end face is divided by the area of the entire end face to determine the ratio of the open area, and the ratio of the open area is multiplied by 100.

In the present embodiment, the cell wall thickness of the honeycomb dried body is preferably 0.07 to 0.46 mm, more preferably 0.10 to 0.25 mm, and still more preferably 0.10 to 0.21 mm.

The above cell wall thickness is sufficient to capture PM in exhaust gas, and an increase in the pressure loss can be effectively suppressed.

If the cell wall thickness is less than 0.07 mm, the mechanical strength of the honeycomb structured body will be reduced because the cell wall is too thin. If the cell wall thickness exceeds 0.46 mm, the pressure loss generated upon passage of exhaust gas through the cell wall will increase because the cell wall is too thick.

The following description is intended to describe a method for manufacturing a honeycomb structured body according to the embodiment of the present invention, which is a method for manufacturing a honeycomb structured body using a honeycomb dried body having a predetermined length obtained by the method for cutting a honeycomb dried body according to the embodiment of the present invention.

(1) After the honeycomb dried body having a predetermined length is obtained, predetermined cells of the honeycomb dried body are plugged by placing a plug material paste as a plug (plugging step). The wet mixture used to manufacture the honeycomb molded body can be used as the plug material paste.
   The plugging step may not be necessary in the case of manufacturing a honeycomb structured body for use as a catalyst carrier.
(2) The honeycomb dried body is heated at 300°C to 650°C in a degreasing furnace to remove the organic matter in the honeycomb dried body (degreasing step). The degreased honeycomb dried body is then transferred to a firing furnace to be fired at 2000°C to 2200°C (firing step). Thereby, the honeycomb fired body is obtained.
   The plug material paste placed at the end of the cells is fired into a plug.
   In addition, the plugging, degreasing, and firing steps may be carried out under conditions that have been conventionally employed for manufacturing honeycomb fired bodies.

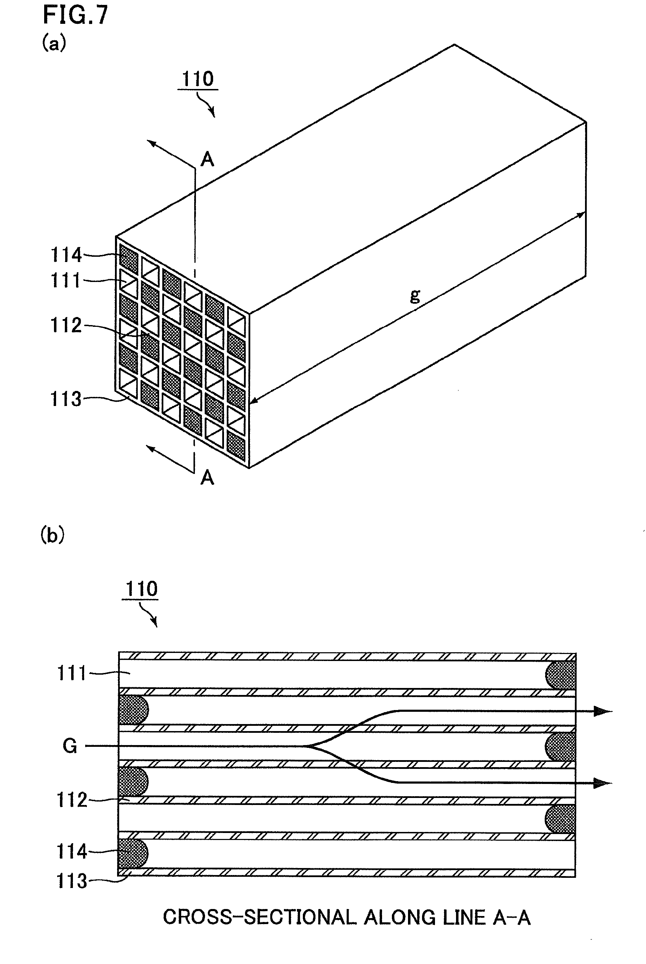

   Fig. 7 (a) is a perspective view schematically showing one example of the honeycomb fired body obtained by the method for manufacturing a honeycomb structured body according to the embodiment of the present embodiment. Fig. 7(b) is a cross-sectional view along line A-A of the honeycomb fired body shown in Fig. 7(a).
   A honeycomb fired body 110 shown in Fig. 7(a) and Fig. 7(b) has a substantially same shape as the honeycomb dried body described above, and includes a plurality of cells 111 arranged side by side in the longitudinal direction (in the direction of an arrow g in Fig. 7(a)) with cell walls 112 between the cells, and an outer wall 113 formed on the periphery. Either end of each cell 111 is plugged with a plug 114.
   Thus, an exhaust gas G (in Fig 7(b), an exhaust gas is indicated by G, and the flow of the exhaust gas is indicated by arrows) that flowed into the cells 111 each having an open end face on one side inevitably passes through the cell walls 112 separating the cells 111, and then flows out from other cells 111 each having an open end face on the other side. PM and the like in the exhaust gas are captured as the exhaust gas G passes through the cell walls 112, so that each cell wall 112 functions as a filter.
   As described above, a honeycomb structured body including honeycomb fired bodies in which the cells are plugged at one end can be suitably used as a ceramic filter.
   Further, a honeycomb structured body including honeycomb fired bodies in which the cells are not plugged at either end can be suitably used as a catalyst carrier.
(3) A plurality of honeycomb fired bodies are stacked in series via the adhesive paste therebetween on a support table to combine the honeycomb fired bodies (combining step) to obtain a honeycomb aggregate body including the plurality of stacked honeycomb fired bodies.
   The adhesive paste contains, for example, an inorganic binder, an organic binder, and inorganic particles. The adhesive paste may further contain inorganic fibers and/or whiskers.
   Examples of the inorganic particles in the adhesive paste include carbide particles and nitride particles. Specific examples include silicon carbide particles, silicon nitride particles, and boron nitride particles. These may be used alone or in combination of two or more thereof. Among the inorganic particles, silicon carbide particles having excellent thermal conductivity are preferred.
   Examples of the inorganic fibers and/or whiskers in the adhesive paste include inorganic fibers and/or whiskers of silica-alumina, mullite, alumina, and silica. These may be used alone or in combination of two or more thereof. The alumina fiber is preferred among the inorganic fibers. The inorganic fibers may be biosoluble fibers.
   The adhesive paste may further contain balloons (i.e., fine hollow spheres including oxide-based ceramics), spherical acrylic particles, or graphite, as needed. The balloons are not particularly limited, and examples thereof include alumina balloons, glass microballoons, shirasu balloons, fly ash balloon (FA balloons), and mullite balloons.
(4) The honeycomb aggregate body is heated so that the adhesive paste is solidified to form an adhesive layer, whereby a quadrangular pillar-shaped ceramic block is obtained.
   The heating and solidifying of the adhesive paste may be carried out under conditions that have been employed for manufacturing honeycomb structured bodies.
(5) The ceramic block is subjected to processing (processing step).
   Specifically, the outer periphery of the ceramic block is processed with a diamond cutter, whereby a ceramic block having a substantially round pillar-shaped outer periphery is obtained.
(6) A peripheral coating material paste is applied to the outer peripheral face of the substantially round pillar-shaped ceramic block, and is dried and solidified to form a peripheral coat layer (peripheral coat layer forming step).

The adhesive paste may be used as the peripheral coating material paste. A paste having a composition different from that of the adhesive paste may also be used as the peripheral coating material paste.

The peripheral coat layer is not necessarily formed, and it may be formed as needed.

The peripheral shape of the ceramic block can be adjusted by providing the peripheral coat layer so as to obtain a round pillar-shaped honeycomb filter.

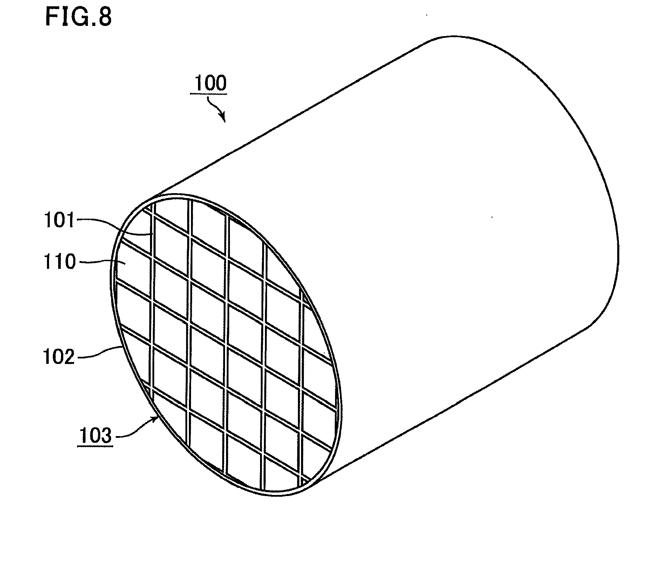

Fig. 8 is a perspective view schematically showing one example of the honeycomb structured body obtained by the method for manufacturing a honeycomb structured body according to the embodiment of the present embodiment.

A honeycomb filter 100 shown in Fig. 8 includes a ceramic block 103 formed by combining a plurality of honeycomb fired bodies 110 via an adhesive layer 101 therebetween, and has a peripheral coat layer 102 on the outer periphery of the ceramic block 103. The peripheral coat layer may be formed as needed. Such a honeycomb structured body including a plurality of honeycomb fired bodies combined together is also referred to as an aggregated honeycomb structured body.

A honeycomb structured body to be manufactured by the method for manufacturing a honeycomb structured body according to the embodiment of the present invention may be a honeycomb structured body consisting of one honeycomb fired body. Such a honeycomb structured body formed of one honeycomb fired body is also referred to as an integral honeycomb structured body. In the case of manufacturing the integral honeycomb structured body, it is preferred to use cordierite or aluminum titanate as the ceramic powder.

The integral honeycomb structured body may be manufactured in the same manner as the aggregated honeycomb structured body, except that the honeycomb molded body formed by extrusion is larger and its external shape is different, compared to the case of manufacturing the aggregated honeycomb structured body.

In the method for manufacturing a honeycomb structured body according to the embodiment of the present invention, a catalyst for converting the exhaust gas may be carried on the cell walls of the honeycomb fired bodies constituting the honeycomb structured body to be manufactured.

Preferred examples of catalysts to be supported include noble metals such as platinum, palladium, and rhodium. Examples of other catalysts include alkali metals such as potassium and sodium; alkaline-earth metals such as barium; and zeolite. These catalysts may be used alone or in combination of two or more thereof.

The effects of the method for cutting a honeycomb dried body and the method for manufacturing a honeycomb structured body according to the present embodiment are listed below.
(1) In the method for cutting a honeycomb dried body of the present embodiment, an uncut honeycomb molded body is dried to obtain an uncut honeycomb dried body. This makes it possible to manufacture a honeycomb dried body having a predetermined length by single cutting. Thus, the entire process for manufacturing the honeycomb structured body can be simplified.
(2) In the case where the method for cutting a honeycomb dried body of the present embodiment is used, unlike the conventional method, removal of a deformed portion of an end face is not necessary, so that the material loss can be reduced.
(3) The method for cutting a honeycomb dried body of the present embodiment is characterized in that the uncut honeycomb dried body (i.e., the honeycomb dried body that has shrunk from drying) is cut while the moving speed of the cutting member is synchronized with the moving speed of the honeycomb molded body in the molding step. Thus, the honeycomb dried body having a predetermined length can be efficiently manufactured.
(4) In the method for cutting a honeycomb dried body of the present embodiment, in the molding step, the moving speed of the honeycomb molded body extruded from the extruder can be measured by the speed sensor; and in the cutting step, the moving speed of the cutting member that moves in a direction parallel to the moving direction of the uncut honeycomb dried body can be set to be the same as the moving speed measured by the speed sensor.
   In this case, the honeycomb dried body can be cut in such a manner that the cut surface is perpendicular to the longitudinal direction of the honeycomb dried body.
(5) In the method for cutting a honeycomb dried body of the present embodiment, a water jet can be used to cut the uncut honeycomb dried body in the cutting step.
   Water jet cutting, which is a high-energy density process, hardly deforms the cut surface of the honeycomb dried body, and can cut with high precision.
   In addition, in the case of cutting with a water jet, the cutting device is lighter and the cutting speed is higher, compared to the case of cutting with a blade. Thus, the cutting step and the molding step can be easily synchronized.
(6) In the method for cutting a honeycomb dried body of the present embodiment, the relationship where V₂' = V₁/cos φ can be satisfied in the cutting step, wherein φ is the angle between the moving direction of the jet nozzle for the water jet and the moving direction of the uncut honeycomb dried body; V₁ is the moving speed of the uncut honeycomb dried body; and V₂' is the moving speed of the jet nozzle.
   In this case, the honeycomb dried body can be cut in such a manner that the cut surface is perpendicular to the longitudinal direction of the honeycomb dried body.
(7) In the method for cutting a honeycomb dried body of the present invention, an uncut honeycomb molded body can be dried by high-frequency dielectric drying in the drying step.
   In this case, the honeycomb molded body can be uniformly dried even to the inside. In addition, high-frequency dielectric drying allows local heating, so that the equipment can be shortened, and the equipment can be further simplified because it only requires a simple electromagnetic shield.
(8) In the method for cutting a honeycomb dried body of the present embodiment, the moisture content of the honeycomb dried body can be 0 to 6% by mass.
   If the moisture content of the honeycomb dried body is in the above range, it is effective in that the shape of the honeycomb dried body can be maintained.
(9) In the method for cutting a honeycomb dried body of the present embodiment, the aperture ratio of the honeycomb dried body can be 60 to 90%. The method for cutting a honeycomb dried body of the present embodiment is effective in that deformation of a honeycomb dried body can be suppressed even if the aperture ratio is high.
(10) In the method for manufacturing a honeycomb structured body of the present embodiment, the method for cutting a honeycomb dried body of the present embodiment can be used. Thus, the honeycomb structured body can be manufactured by a significantly simplified manufacturing process of the honeycomb structured body.

### EXAMPLES

Examples that more specifically disclose the embodiment of the present invention are described below. The present invention is not limited to these following examples.

### (Manufacturing of honeycomb dried body)

A mixture was obtained by mixing 54.8% by weight of coarse powder of silicon carbide having an average particle diameter of 22 µm and 23.5% by weight of fine powder of silicon carbide having an average particle diameter of 0.5 µm. To the resulting mixture were added 4.4% by weight of an organic binder (methylcellulose), 2.6% by weight of a lubricant (UNILUB available from NOF Corporation), 1.2% by weight of glycerin, and 13.5% by weight of water, followed by kneading to prepare a wet mixture. Subsequently, the wet mixture was continuously extruded from the extruder (molding step).

In this step, an uncut honeycomb molded body having the same shape as the honeycomb dried body 20 shown in Fig. 2 was manufactured.

The cell wall thickness was 0.40 mm (16 mil) and the cell density was 200 pcs/inch².

The molding speed was 0.1 m/min.

Next, a high-frequency dielectric dryer placed at a position 30 mm away from the die of the extruder was used to dry the uncut honeycomb molded body into an uncut honeycomb dried body.

High-frequency dielectric heating conditions were as follows: an output of 0.3 kW, a frequency of 13.56 MHz, and an electrode length of 150 mm.

Subsequently, a water jet cutter was used to cut the honeycomb dried body into a cut honeycomb dried body.

The cutting conditions were as follows: a water nozzle diameter of the water jet cutter of 0.2 mm, a lower nozzle diameter of 0.5 mm, a water pressure of 300 MPa, a cutting speed of 70 mm/s, an angle of 45° between the jet nozzle and the upper face of the honeycomb dried body, and a distance of 1 mm between the tip end of the jet nozzle and the upper face of the honeycomb dried body.

For cutting, the moving speed of the conveyor was synchronized with the moving speed of the jet nozzle for the water jet.

### (Evaluation of flatness)

The flatness of the lateral face of the honeycomb dried body obtained in Example 1 was measured using a 3D measuring machine (for example, BH-V507 available from Mitsutoyo Corporation).

As a result, the cut surface of the honeycomb dried body in Example 1 had a flatness of 0.10 mm. This confirms that the cut surface of the honeycomb dried body is superior in flatness and that the honeycomb dried body can be obtained by single cutting.

### (Manufacturing of honeycomb structured body)

The cells of the above obtained honeycomb dried body were plugged in such a manner that the ends of the cells were plugged at the positions shown in Fig. 7(a).

The wet mixture was used as a plug material paste. After plugging the cells, the honeycomb dried body including the plug material paste was dried using a dryer.

Subsequently, the honeycomb dried body with the plugged cells was degreased at 400°C (degreasing treatment) and fired at 2200°C under argon atmosphere at normal pressure for 3 hours (firing treatment).

Thereby, a honeycomb fired body was manufactured.

The honeycomb fired body was a honeycomb fired body formed of a silicon carbide fired body having a porosity of 42%, an average pore diameter of 11 µm, a size of 34.3 mm x 34.3 mm x 150 mm, a number of cells (cell density) of 200 pcs/inch², an aperture ratio of 60%, and a cell wall thickness of 0.40 mm (16 mil).

Subsequently, multiple honeycomb fired bodies were combined using a heat-resistant adhesive paste containing 30% by weight of alumina fiber having an average fiber length of 20 µm, 21% by weight of silicon carbide particles having an average particle diameter of 0.6 µm, 15% by weight of silica sol, 5.6% by weight of carboxymethyl cellulose, and 28.4% by weight of water; and the adhesive paste was dried and solidified at 120 °C to form an adhesive layer, whereby a rectangular pillar-shaped ceramic block was obtained.

Subsequently, the outer periphery of the rectangular pillar-shaped ceramic block was processed with a diamond cutter, whereby a substantially round pillar-shaped ceramic block was obtained.

Subsequently, a sealing material paste having the same composition as the adhesive paste was applied to the outer peripheral face of the ceramic block, and the sealing material paste was dried and solidified at 120°C to form a peripheral coat layer, whereby manufacturing of a round pillar-shaped honeycomb structured body was completed.

The honeycomb structured body had a diameter of 143.8 mm and a longitudinal length of 150 mm.

The above method can manufacture a honeycomb dried body without the step of cutting a honeycomb molded body. Thus, the method was confirmed to be capable of manufacturing a honeycomb structured body with a reduced number of steps.

### REFERENCE SIGNS LIST

- 1:: molding-drying-cutting apparatus
- 10:: honeycomb molded body
- 20:: honeycomb dried body
- 21, 111:: cell
- 22, 112:: cell wall
- 23, 113:: outer wall
- 30:: water jet cutter
- 31:: jet nozzle
- 32:: high-pressure water inlet
- 33:: water nozzle
- 34:: lower nozzle
- 35:: air/abrasive inlet
- 40:: high-frequency dielectric dryer
- 41:: upper electrode
- 42:: lower electrode
- 50:: extruder
- 60A:: first conveyor
- 60B:: second conveyor
- 70:: speed sensor
- 80:: passage sensor
- 100:: honeycomb structured body
- 101:: adhesive layer
- 102:: peripheral coat layer
- 103:: ceramic block
- 110:: honeycomb fired body
- 114:: plug

## Claims

1. A method for cutting a honeycomb dried body, the method comprising the steps of:
molding a ceramic raw material by continuous extrusion using an extruder into an uncut honeycomb molded body including a plurality of cells as fluid passages and cell walls defining the plurality of cells;
drying the uncut honeycomb molded body to obtain an uncut honeycomb dried body; and
cutting the uncut honeycomb dried body to a predetermined length,
the molding, the drying, and the cutting being continuously carried out in this order, and
in the cutting, the uncut honeycomb dried body being cut while a moving speed of a cutting member is synchronized with a moving speed of the uncut honeycomb molded body in the molding.

2. The method according to claim 1,
wherein in the molding, a moving speed of the uncut honeycomb molded body extruded from the extruder is measured by a speed sensor, and
in the cutting, a moving speed of a cutting member in a direction parallel to a moving direction of the uncut honeycomb dried body is set to be the same as the moving speed measured by the speed sensor.

3. The method according to claim 1 or 2,
wherein in the cutting, the uncut honeycomb dried body is cut with a water jet.

4. The method according to claim 3,
wherein a relationship where V₂' = V₁/cos φ is satisfied in the cutting, wherein φ is an angle between a moving direction of a jet nozzle for the water jet and a moving direction of the uncut honeycomb dried body; V₁ is a moving speed of the uncut honeycomb dried body; and V₂' is a moving speed of the jet nozzle.

5. The method according to any one of claims 1 to 4, wherein, in the drying, the uncut honeycomb molded body is dried by high-frequency dielectric drying.

6. The method according to any one of claims 1 to 5,
wherein the honeycomb dried body has a moisture content of 0 to 6% by mass.

7. The method according to any one of claims 1 to 6,
wherein the honeycomb dried body has an aperture ratio of 60 to 90%.

8. A method for manufacturing a honeycomb structured body including a honeycomb fired body including a plurality of cells as fluid passages and cell walls defining the plurality of cells,
the method comprising the step of firing a honeycomb dried body having a predetermined length obtained by the method according to any one of claims 1 to 7 to obtain the honeycomb fired body.
